# EUROPÄISCHE PATENTSCHRIFT

(11) **EP 3 498 637 B1**
(45) Veröffentlichungstag und Bekanntmachung des Hinweises auf die Patenterteilung: **23.07.2025**
(21) Anmeldenummer: 18199241.3
(22) Anmeldetag: 09.10.2018
(51) Int. Cl.: B65G 47/26, B65G 47/31, B65G 57/32, B65G 57/11

(54) **TRANSPORTANORDNUNG FÜR HOLZFASERPLATTEN UND VERFAHREN ZUM TRANSPORTIEREN VON HOLZFASERPLATTEN**
TRANSPORT ASSEMBLY FOR WOODEN FIBRE PLATE AND A METHOD FOR TRANSPORTING WOODEN FIBRE PLATES
DISPOSITIF DE TRANSPORT POUR PANNEAUX DE FIBRES DE BOIS ET PROCÉDÉ DE TRANSPORT DE PANNEAUX DES FIBRES DE BOIS

(30) Priorität: 15.12.2017 DE 102017011662
(43) Veröffentlichungstag der Anmeldung: 19.06.2019
(73) Patentinhaber: Siempelkamp Maschinen- und Anlagenbau GmbH, 47803 Krefeld (DE)
(72) Erfinder: Vaeßen, Michael, 41462 Neuss (DE); Krause, Jürgen, 82110 Germering (DE); Maier, Ulrich, 40221 Düsseldorf (DE); Friedrich, David, 40880 Ratingen (DE); Von Afferden, Achim, 47906 Kempen (DE); Buschmann, Adalbert, 47179 Duisburg (DE)
(74) Vertreter: Andrejewski - Honke Patent- und Rechtsanwälte Partnerschaft mbB

(56) Entgegenhaltungen:
- EP-A1- 0 211 996
- EP-A1- 2 617 667
- CN-A- 106 915 649
- DE-A1- 102005 005 478
- DE-U1- 202006 018 443
- US-A- 2 748 917
- US-A- 2 925 167
- US-A- 5 419 425
- US-A1- 2011 005 171

## Beschreibung

Die Erfindung betrifft eine Transportanordnung für Holzfaserplatten mit zumindest einer ersten Transportvorrichtung für den liegenden Transport von Holzfaserplatten.

Die Erfindung betrifft ferner ein Verfahren zum Transportieren von Holzfaserplatten, wobei die Holzfaserplatten liegend auf zumindest einer ersten Transportvorrichtung transportiert werden.

Unter Holzwerkstoffplatten seien beispielhaft Spanplatten, OSB-Platten, Leichtbauplatten, Mehrschichtplatten, HDF- oder MDF-Platten genannt.

Als Transportvorrichtung werden in erster Linie umlaufende Transportbänder verstanden, von denen auch mehrere parallel nebeneinander laufen können, aber auch angetriebene Transportrollen oder Schienentransport ist im Rahmen dieser Erfindung nicht ausgeschlossen.

Die Herstellung der Holzfaserplatten geschieht in der Regel so, dass streufähiges Gut (im Wesentlichen beleimte Holzspäne) auf ein Transportband als Holzwerkstoffmatte gestreut wird. Diese Holzwerkstoffmatten können Dicken von wenigen Millimetern bis zu einem Meter aufweisen. Die Streustationen sind heutzutage in der Lage sowohl in Förderrichtung des Transportbandes als auch in Querrichtung die Streumenge über eine oder mehrere hintereinandergeschaltete dosierverstellbare Streustationen zu variieren. Mehrere hintereinandergeschaltete Streustationen ermöglichen die Bildung unterschiedlicher Schichten, beispielsweise Deck- und Mittelschichten. Das Transportband leitet die Holzwerkstoffmatte weiter zu einer Presse. Diese Presse zur Beaufschlagung der über das Transportband in einer Förderrichtung zugeführten Holzwerkstoffmatte mit Druck und Wärme wird in der Regel durch eine Doppelbandpresse realisiert. Das fertige Produkt ist ein Plattenstrang, der in Holzwerkstoffplatten zersägt wird.

Diese Holzwerkstoffplatten werden häufig weiteren Bearbeitungs- bzw. Behandlungsstationen zugeführt. Sie können beispielsweise vermessen, sortiert, geschliffen, gekühlt, getrocknet oder versiegelt werden. Diese Prozesse benötigen häufig einen gewissen zeitlichen Spielraum, so dass eine kontinuierliche gleichmäßige Zufuhr nicht möglich ist.

Oder es werden rechtwinklige Platten beim Transport im rechten Winkel umgelenkt, so dass die in Förderrichtung verlaufende Kante plötzlich kürzer oder länger wird.

Der Stand der Technik kennt zur Lösung dieser Probleme die Vorgänge der Stapelbildung und des Stapeltransports, sowie die "Schuppung" oder die "Entschuppung" der Holzfaserplatten, was so viel bedeutet wie den Transport mit zumindest teilweise übereinanderliegenden Holzfaserplatten oder den die Holzfaserplatten auf Abstand haltenden Einzeltransport. Hierzu seien die Gebrauchsmuster DE202006018443U1 und DE202007001451U1 genannt. In diesen Veröffentlichungen ist man darauf bedacht, zu große Beanspruchungen auf die Holzfaserplatten bei der Bildung von Stapeln oder Schuppen und zu große und schädliche Friktionen der Holzplatten bei der Auflösung der Schuppung in Grenzen zu halten.

Das wird aber nur teilweise erreicht. Denn zur Schuppung fällt eine Holzfaserplatte von einem höher gelegenen Transportband auf ein tiefer liegendes Transportband und zur Stapelbildung werden die Holzfaserplatten aufeinander verschoben. Und auch die Entschuppung ist ohne möglicherweise die Holzfaserplatte verkratzende Friktion nicht möglich.

Im Übrigen wird in der DE 10 2005 0054 78 A1 eine Sammelvorrichtung für plattenförmige Gegenstände am Ende einer Transportstrecke beschrieben. Diese Transportstrecke ist als Doppelbandförderer ausgebildet. Die zugeführten Platten sollen in der Sammelvorrichtung gestapelt werden. Dazu ist zwischen der Transportstrecke und der Sammelvorrichtung ein Förderer vorgesehen, der gegenüber der Transportstrecke abgesenkt ist und mit reduzierter Geschwindigkeit arbeitet, sodass die von oben auf den Förderer fallenden Platten schuppenförmig übereinander laufen.

Eine weitere Ausführungsform einer Transportvorrichtung für das Stapeln von Kartonplatten für Kartonverpackungen ist aus der CN 106915649 A bekannt. Diese umfasst zwei hintereinander angeordnete Transportvorrichtungen, zwischen denen eine Anhebevorrichtung vorgesehen ist, um einzelne Platten voneinander zu trennen. Die CN 106915649 A offenbart eine Transportanordnung gemäß dem Oberbegriff des Anspruchs 1.

Es ist die Aufgabe der Erfindung, die Beanspruchung der Holzfaserplatten beim Transport gegenüber dem Stand der Technik zu verringern und trotzdem auf eine wechselnde Transportgeschwindigkeit umschalten zu können.

Es ist die Aufgabe der Erfindung, die Beanspruchung der Holzfaserplatten beim Transport gegenüber dem Stand der Technik zu verringern und trotzdem auf eine wechselnde Transportgeschwindigkeit umschalten zu können.

Die Aufgabe wird hinsichtlich der Transportanordnung für Holzfaserplatten durch die Merkmale des Anspruchs 1 gelöst. Es sind eine Anhebevorrichtung für eine Holzfaserplatte und eine mit der Anhebevorrichtung funktionell gekoppelten Beschleunigungs- oder Bremsvorrichtung für die angehobene Holzfaserplatte oder der unmittelbar vor ihr transportierten Holzfaserplatte zur Erzeugung oder Auflösung teilweise übereinanderliegender Holzfaserplatten vorgesehen.

Dadurch dass eine Holzfaserplatte mit einer Anhebevorrichtung zur Erzeugung der Schuppung oder zur Auflösung der Schuppung eingesetzt wird, wird keine Friktion mehr von zwei zumindest teilweise übereinander liegenden Holzfaserplatten mehr erzeugt. Die Holzfaserplatten werden bei dem Vorgang deutlich mehr geschont. Außerdem wird die Positionsgenauigkeit der Holzfaserplatten auf den Transportvorrichtungen verbessert.

Erfindungsgemäß ist die Anhebevorrichtung durch in ihrer Höhe verstellbare Laufrollen gebildet.

Damit wird auch eine mögliche Friktion mit der Anhebevorrichtung weitgehend vermieden. Der Transport kann beim Anheben weiter erfolgen.

Erfindungsgemäß weisen die Laufrollen einen Antrieb auf.

Damit kann eine Holzfaserplatte in angehobenem Zustand über die vorweglaufende Holzfaserplatte gefahren werden, indem die angehobene Platte auf den Laufrollen etwas schneller als bisher transportiert wird. Es sollte also eine Geschwindigkeitsdifferenz zwischen der angehobenen Holzfaserplatte und der in Laufrichtung vor ihr transportierten Holzfaserplatte realisierbar sein. Daraufhin kann ein vorsichtiges Senken der Holzfaserplatte erfolgen, so dass es zu keinerlei Friktion unter den Holzfaserplatten kommt. Umgekehrt kann aber auch eine bereits auf einer anderen Platte teilaufliegende Holzplatte angehoben und die darunterliegende Holzfaserplatte auf der Transportvorrichtung fortgeführt werden, was zur Auflösung der Schuppung führt.

Erfindungsgemäß ist die Abbrems- oder Beschleunigungsvorrichtung durch eine zweite Transportvorrichtung gebildet.

Man kann auf einfache Weise ein Transportband als erste Transportvorrichtung mit einer Geschwindigkeit v₁ fahren. Ein zweites folgendes Transportband als zweite Transportvorrichtung wird bei der Schuppenbildung mit einer niedrigeren Geschwindigkeit v₂ < v₁ betrieben. Die installierte Anhebevorrichtung hebt die Holzfaserplatte, die noch mit der Geschwindigkeit v₁ transportiert wird, an, und so wird eine hintere Holzfaserplatte über die in Laufrichtung vordere befördert, die auf der zweiten Transportvorrichtung mit der Geschwindigkeit v₂ transportiert wird.

Die langsamere Geschwindigkeit der überlappenden Holzfaserplatten der zweiten Transportvorrichtung ermöglicht den großen Vorteil, dass auf gleicher Transportlänge, beispielsweise zu einer endgültigen Abstapelanlage, die Holzfaserplatten deutlich besser und wie gewünscht abkühlen können.

Mit Vorteil kann auch vorgesehen sein, dass die Transporthöhen der ersten und der zweiten Transportvorrichtung identisch sind.

Dadurch fällt eine Holzfaserplatte nicht unter der Gefahr der Beschädigung von einer höher gelegenen Transportvorrichtung auf eine Transportvorrichtung auf niedrigerem Niveau wie es im Stand der Technik der Fall ist.

Erfindungsgemäß ist die Anhebevorrichtung zwischen der ersten und der zweiten Transportvorrichtung installiert.

Hier ist der genügend Bauraum vorhanden, um beispielsweise eine oder mehrere höhenverstellbare Laufrolle(n) zu installieren. Eine Laufrolle bleibt dabei mit ihrem obersten Punkt auf der Höhe der Transportvorrichtung, wenn keine Schuppung oder Entschuppung stattfinden soll. Sie kann aber auch bequem in dem Augenblick angehoben werden, wenn eine Holzfaserplatte eine Anhebeposition erreicht hat. In der Regel reicht der Bauraum auch aus, um eine Anhebevorrichtung mit einer Rampenfunktion einzusetzen, was dem schonenden Behandeln der Holzfaserplatten noch mehr entgegenkommt. Hier kann ein schwenkbares kurzes Transportband eingesetzt werden oder aber auch mehrere Laufrollen hintereinander, die in ihrer absoluten Höhe sukzessive zunehmen.

Es ist von besonderem Vorteil, wenn eine Steuer- oder Regelvorrichtung vorgesehen ist, mit der in Abhängigkeit von der Transportgeschwindigkeit und/oder der Länge der Holzfaserplatten die Beschleunigung oder die Abbremsung einstellbar ist.

Wird die geschnittene Holzfaserplatte nach der kontinuierlichen Presse nicht nur abgestapelt sondern unterliegt weiteren Behandlungsschritten, beispielsweise einer Vermessung, so muss ein Freiraum zwischen den Platten geschaffen werden, der ausreicht um beispielsweise die Vermessung durchzuführen. Je kürzer die geschnittene Holzfaserplatte in ihrer Transportrichtung bei konstanter Produktionsgeschwindigkeit in der kontinuierlichen Presse ist, desto größer muss die Beschleunigung zur Abstandsvergrößerung der Platte sein. Arbeitet die Presse beispielsweise mit einer Geschwindigkeit von 2 m/s und benötigt die Messvorrichtung 0,25 Sekunden, so muss die Geschwindigkeit einer 2 Meter langen Holzfaserplatte um 25% erhöht werden, während die Geschwindigkeit einer 4 Meter langen Holzfaserplatte nur um 12,5% erhöht werden muss.

Betrachtet man diese komplexen Zusammenhänge, so ist es vorteilhaft, wenn durch die Steuer- oder Regelvorrichtung die Transportgeschwindigkeit von der ersten und der zweiten Transportvorrichtung einstellbar ist.

Auch bei einer nach einem Behandlungschritt für die Holzfaserplatte neu gebildeten Schuppung ist es sinnvoll, dass die Steuerung die Geschwindigkeiten von erster und zweiter Transportvorrichtung und ggf. dem Antrieb der Laufrollen regelt.

Für den Fall, das die Beschleunigungen der Holzfaserplatte, insbesondere bei sehr leichten und großen Platten, zu groß werden, ist es vorteilhaft, wenn auf der der Anhebevorrichtung gegenüberliegenden Seite der Holzfaserplatte ein Andruckelement vorgesehen ist.

Die Aufgabe der Erfindung wird hinsichtlich des Verfahrens zum Transportieren von Holzfaserplatten durch die Merkmale des Anspruchs 6 gelöst. Es ist vorgesehen, dass eine Holzfaserplatte in einer Anhebeposition auf oder nach der ersten Transportvorrichtung angehoben wird, und zwischen der jeweils angehobenen Holzfaserplatte und der in Transportrichtung unmittelbar vor ihr transportierten Holzfaserplatte eine Geschwindigkeitsdifferenz eingestellt wird,
so dass sich ein Überlappen der Holzfaserplatten oder eine Auflösung einer bereits vorhandenen Überlappung ergibt.

Die daraus resultierenden Vorteile sind bereits bei der Beschreibung der Vorrichtungsansprüche ausgeführt.

Analog ist es ebenso vorteilhaft, wenn verfahrensmäßig
- eine Holzfaserplatte bei einem überlappenden Transport in der Anhebeposition durch in der Höhe verstellbare Laufrollen angehoben wird, und/oder
- eine zweite Transportvorrichtung die angehobene Holzfaserplatte oder die unmittelbar vor ihr transportierte Holzfaserplatte bremst oder beschleunigt wobei in besonderer Ausführungsform
- die Geschwindigkeitsdifferenz aufgrund eines Längenmaßes und/oder der Transportgeschwindigkeit der Holzfaserplatte eingestellt wird

Die Erfindung wird im Folgenden unter Bezugnahme auf die Zeichnungen näher erläutert. Alle drei Figuren zeigen eine schematische, teilweise geschnittene Darstellung der erfindungsgemäßen Transportanordnung.

Dabei zeigen
Fig. 1 und Fig. 2 zwei zeitlich versetzte Zustände einer ersten Ausführungsform und
Fig. 3 eine um mehrere Merkmale ergänzte Transportanordnung.

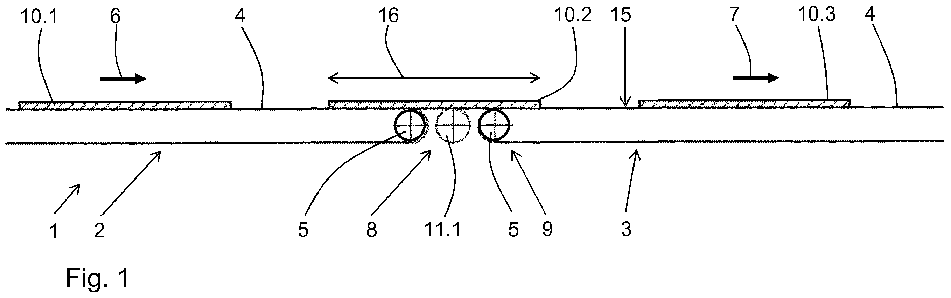

Fig. 1 zeigt eine Transportanordnung 1 mit einer ersten Transportvorrichtung 2 und einer zweiten Transportvorrichtung 3. Beide Transportvorrichtungen sind in diesem Ausführungsbeispiel durch ein oder mehrere Transportbänder 4 gebildet, die um in der Regel angetriebene Umlenkwalzen 5 umlaufen.

Auf den Transportvorrichtungen 2, 3 werden Holzfaserplatten 10.1, 10.2, 10.3 mit einer Länge transportiert, die hier das Bezugszeichen 16 trägt. Zu dem dargestellten Zeitpunkt sind alle Holzfaserplatten 10.1, 10.2, 10.3 zueinander beabstandet. Beispielhaft wird die Holzfaserplatte 10.1 von der ersten Transportvorrichtung 2 transportiert und die Holzfaserplatte 10.3 von der zweiten Transportvorrichtung 3. Die Holzfaserplatte 10.2 befindet sich genau im Übergangsbereich der ersten Transportvorrichtung 2 und der zweiten Transportvorrichtung 3. Alle Holzfaserplatten 10.1, 10.2, 10.3 werden auf der gleichen Transporthöhe 15 bewegt. Die einzelnen Holzfaserplatten 10.1, 10.2, 10.3 behalten einen konstanten Abstand zueinander, weil beide Transportvorrichtungen 2, 3 mit der gleichen Geschwindigkeit 6, 7 betrieben werden. Die Geschwindigkeit v₁ des ersten Transportbandes wird durch den Pfeil 6, die Geschwindigkeit v₂ des zweiten Transportbandes wird durch den Pfeil 7 dargestellt.

Während des Transports beabstandeter Holzfaserplatten 10.1, 10.2, 10.3 befindet sich eine höhenverstellbare Laufrolle 11.1 zwischen der ersten Transportvorrichtung 2 und der zweiten Transportvorrichtung 3 auf einer Höhe, bei der eine Holzfaserplatte 10.1, 10.2, 10.3 auf gleicher Transporthöhe wie bei den Transportvorrichtungen 2, 3 aufliegend transportiert wird.

Ist es beispielsweise notwendig, die Platten auf ihrem Transport bis zur nächsten Zielstation langsamer zu transportieren, um für eine bessere Abkühlung zu sorgen, werden die Holzfaserplatten 10.1, 10.2, 10.3 "geschuppt".

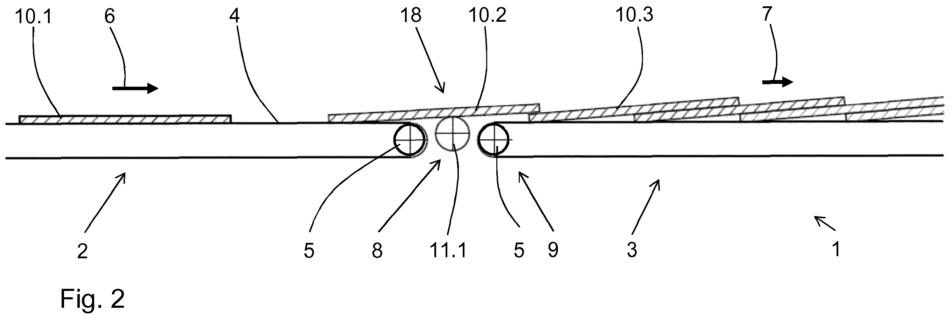

Dieser Vorgang ist besonders deutlich in der Fig. 2 dargestellt. Erfindungsgemäß soll das teilweise Übereinanderlegen der Holzfaserplatten 10.1, 10.2, 10.3 möglichst ohne Friktion unter den Platten, weitgehend ohne Friktion zwischen den Platten und der Transportvorrichtung und ohne Einfluss nehmendes Fallen der Platten von einem höheren auf ein niedrigeres Transportniveau erfolgen.

Dazu zeigt Fig. 2, wie im richtigen Moment die Laufrolle 11.1 als Anhebevorrichtung 8 in der Anhebeposition 18 eine Holzfaserplatte (in dieser Darstellung die mit dem Bezugszeichen 10.2) anhebt. Da die Geschwindigkeiten der Transportvorrichtungen 2, 3 unterschiedlich sind, und zwar v₂ < v₁, wird die Platte über die in Laufrichtung vor ihr transportierte gehren und dann vorsichtig aufgelegt. Die Überlappung kann je nach Geschwindigkeitsunterschied (v₂ zu v₁) 5 bis 100% betragen. Dies wird durch eine Beschleunigungs-/Bremsvorrichtung 9, die in diesem Ausführungsbeispiel auch durch die zweite Transportvorrichtung gebildet wird, realisiert. Die Holzfaserplatten 10.1, 10.2, 10.3 werden demgemäß wunschgemäß auf der zweiten Transportvorrichtung langsamer als beispielsweise beim Austritt und nach dem Querschnitt zu Platten nach der kontinuierlichen Presse transportiert. Damit wird eine bessere Abkühlungsmöglichkeit geschaffen.

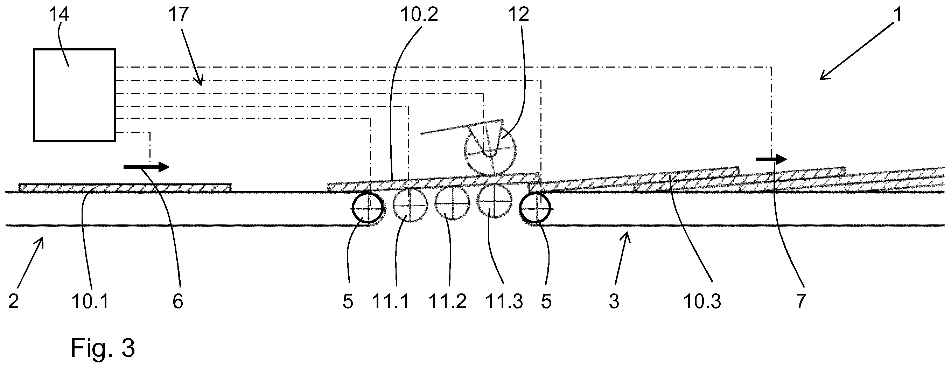

Fig. 3 verdeutlicht einige Varianten und zusätzliche Möglichkeiten, die die Erfindung bietet.

So sind beispielsweise für die Anhebevorrichtung mehrere Laufrollen 11.1, 11.2, 11.3 eingesetzt, die in Laufrichtung der Holzfaserplatten rampenähnlich eingestellt werden können. Diese Rampe wäre auch durch ein kurzes Transportband realisierbar.

Damit eine Holzfaserplatte (hier 10.2) insbesondere bei höheren Geschwindigkeiten nicht den Kontakt verliert, ist ein Andruckelement 12, ebenfalls in Form einer Laufrolle eingesetzt, das auf der den Laufrollen 11.1, 11.2, 11.3 entgegengesetzten Seit der Holzfaserplatten wirkt.

Zudem ist eine Steuer- oder Regelvorrichtung 14 vorgesehen, mit der in Abhängigkeit von der Transportgeschwindigkeit und/oder der Länge 16 der Holzfaserplatten 10.1, 10.2, 10.3 die Beschleunigung oder die Abbremsung einstellbar ist. Strichpunktiert sind beispielhaft verschiedene Steuerleitungen dargestellt , die von oben nach unten gesehen auf
- die Geschwindigkeit v2 der zweiten Transportvorrichtung 3
- die Brems- oder Beschleunigungsvorrichtung 9
- den Druck oder den Antrieb des Andruckelementes 12
- den Antrieb der Anhebvorrichtung bzw. deren Laufrollen 11.1, 11.2, 11.3
- die Geschwindigkeit v₁ der ersten Transportvorrichtung 2
wirken oder Werte abgreifen.

### Bezugszeichen:

- 1: Transportanordnung
- 2: Erste Transportvorrichtung
- 3: Zweite Transportvorrichtung
- 4: Transportband
- 5: Umlenkwalzen
- 6: Geschwindigkeit des ersten Transportbandes v1
- 7: Geschwindigkeit des zweiten Transportbandes v2
- 8: Anhebevorrichtung
- 9: Beschleunigungs-/Bremsvorrichtung
- 10.1, 10.2, 10.3: Holzfaserplatte
- 11.1, 11.2, 11.3: Laufrolle
- 12: Andruckelement
- 13: Andruckrolle
- 14: Steuer- oder Regelvorrichtung
- 15: Transporthöhe
- 16: Plattenlänge
- 17: Steuerleitungen
- 18: Anhebeposition

## Patentansprüche

1. Transportanordnung für Holzfaserplatten (10.1, 10.2, 10.3) mit zumindest
- einer ersten Transportvorrichtung (2) für den liegenden Transport von Holzfaserplatten (10.1, 10.2, 10.3),
- einer Anhebevorrichtung (8) für eine Holzfaserplatte (10.1, 10.2, 10.3) und
- einer mit der Anhebevorrichtung (8) funktionell gekoppelten Beschleunigungs- oder Bremsvorrichtung (9) für die angehobene Holzfaserplatte (10.2) oder der unmittelbar vor ihr transportierten Holzfaserplatte (10.3) zur Erzeugung oder Auflösung teilweise übereinanderliegender Holzfaserplatten,
wobei die Abbrems- oder Beschleunigungsvorrichtung (9) durch eine zweite Transportvorrichtung (3) gebildet ist,
wobei die Anhebevorrichtung (8) zwischen der ersten Transportvorrichtung (2) und der zweiten Transportvorrichtung (3) installiert ist,
und **dadurch gekennzeichnet, dass**
die Anhebevorrichtung (8) durch in ihrer Höhe verstellbare Laufrollen (11.1., 11.2, 11.3) gebildet ist,
, und dass die Laufrollen (11.1, 11.2, 11.3) einen Antrieb aufweisen.

2. Transportanordnung gemäß Anspruch 1 , **dadurch gekennzeichnet, dass** die Transporthöhen (15) der ersten Transportvorrichtung (2) und der zweiten Transportvorrichtung (3) identisch sind.

3. Transportanordnung gemäß Anspruch 1 oder 2, **dadurch gekennzeichnet, dass** eine Steuer- oder Regelvorrichtung (14) vorgesehen ist, mit der in Abhängigkeit von der Transportgeschwindigkeit (6, 7) und/oder der Länge (16) der Holzfaserplatten (10.1, 10.2, 10.3) die Beschleunigung oder die Abbremsung einstellbar ist.

4. Transportanordnung gemäß Anspruch 3, **dadurch gekennzeichnet, dass** durch die Steuer- oder Regelvorrichtung (14) die Transportgeschwindigkeit (6, 7) von der ersten Transportvorrichtung (2) und der zweiten Transportvorrichtung (3) einstellbar ist.

5. Transportanordnung gemäß Anspruch 1 bis 4, **dadurch gekennzeichnet, dass** auf der der Anhebevorrichtung (8) gegenüberliegenden Seite der Holzfaserplatte (10.1, 10.2, 10.3) ein Andruckelement (12) vorgesehen ist.

6. Verfahren zum Transportieren von Holzfaserplatten (10.1, 10.2, 10.3), wobei die Holzfaserplatten (10.1, 10.2, 10.3) liegend auf einer Transportanordnung transportiert werden,
wobei die Transportanordnung
- eine erste Transportvorrichtung (2) für den liegenden Transport von Holzfaserplatten (10.1, 10.2, 10.3),
- eine Anhebevorrichtung (8) für eine Holzfaserplatte (10.1, 10.2, 10.3) und
- eine mit der Anhebevorrichtung (8) funktionell gekoppelten Beschleunigungs- oder Bremsvorrichtung (9) für die angehobene Holzfaserplatte (10.2) oder der unmittelbar vor ihr transportierten Holzfaserplatte (10.3) zur Erzeugung oder Auflösung teilweise übereinanderliegender Holzfaserplatten,
aufweist,
wobei die Abbrems- oder Beschleunigungsvorrichtung (9) durch eine zweite Transportvorrichtung (3) gebildet ist,
wobei die Anhebevorrichtung (8) zwischen der ersten Transportvorrichtung (2) und der zweiten Transportvorrichtung (3) installiert ist,
wobei die Anhebevorrichtung (8) durch in ihrer Höhe verstellbare Laufrollen (11.1., 11.2, 11.3) gebildet ist, wobei die Laufrollen (11.1, 11.2, 11.3) einen Antrieb aufweisen,
wobei eine Holzfaserplatte (10.2) in einer Anhebeposition (18) auf oder nach der ersten Transportvorrichtung (2) angehoben wird,
und zwischen der jeweils angehobenen Holzfaserplatte (10.2) und der in Transportrichtung unmittelbar vor ihr transportierten Holzfaserplatte (10.3) eine Geschwindigkeitsdifferenz eingestellt wird,
so dass sich ein Überlappen der Holzfaserplatten oder eine Auflösung einer bereits vorhandenen Überlappung ergibt.

7. Verfahren gemäß Anspruch 6, **dadurch gekennzeichnet, dass** eine Holzfaserplatte (10.1, 10.2, 10.3) bei einem überlappenden Transport in der Anhebeposition (18) durch in der Höhe verstellbare Laufrollen (11.1, 11.2, 11.3) angehoben wird.

8. Verfahren gemäß einem der Ansprüche 6 oder 7, **dadurch gekennzeichnet, dass** eine zweite Transportvorrichtung (3) die angehobene Holzfaserplatte (10.2) oder die unmittelbar vor ihr transportierte Holzfaserplatte (10.3) bremst oder beschleunigt.

9. Verfahren gemäß einem der Ansprüche 6 bis 8, **dadurch gekennzeichnet, dass** die Geschwindigkeitsdifferenz aufgrund eines Längenmaßes und/oder der Transportgeschwindigkeit der Holzfaserplatte (10.1, 10.2, 10.3) eingestellt wird.

10. Verfahren gemäß Anspruch 9, **dadurch gekennzeichnet, dass** die Einstellung aufgrund von in einer Steuerung hinterlegter Daten und Abhängigkeiten von Transportgeschwindigkeit und Plattenlänge erfolgt.

11. Verfahren gemäß Anspruch 6, **dadurch gekennzeichnet, dass** die Berührungsfläche oder -linie mit der Holzfaserplatte (10.1, 10.2, 10.3) einer Anhebevorrichtung (8) während des Transports von nicht überlappenden Holzfaserplatten (10.1, 10.2, 10.3) wenigstens in etwa auf gleichem Höhenniveau (15) wie die erste Transportvorrichtung (2) eingestellt wird.

## Claims

1. Transporting arrangement for wood fibre boards (10.1, 10.2, 10.3) with at least
- a first transporting device (2) for the horizontal transportation of wood fibre boards (10.1, 10.2, 10.3),
- a lifting device (8) for a wood fibre board (10.1, 10.2, 10.3) and,
- functionally connected to the lifting device (8), an acceleration or braking device (9) for the lifted wood fibre board (10.2) or the wood fibre board (10.3) being transported immediately in front of it in order to produce or undo partially overlapping wood fibre boards,
wherein the braking or acceleration device (9) is formed by a second transporting device (3),
wherein the lifting device (8) is installed between the first transporting device (2) and the second transporting device (3),
and **characterised in that**
the lifting device (8) is formed by height-adjustable rollers (11.1, 11.2, 11.3),
and **in that**
the rollers (11.1, 11.2, 11.3) have a drive.

2. Transporting arrangement according to claim 1, **characterised in that** the transporting heights (15) of the first transporting device (2) and of the second transporting device (3) are identical.

3. Transporting arrangement according to claim 1 or 2, **characterised in that** a control or regulating device (14) is provided with which, as a function of the transporting speed (6, 7) and/or the length (16) of the wood fibre boards (10.1, 10.2, 10.3), the acceleration or the braking can be adjusted.

4. Transporting arrangement according to claim 3, **characterised in that** the transporting speed (6, 7) of the first transporting device (2) and or the second transporting device (3) is adjustable by way of the control or regulating device (14).

5. Transporting arrangement according to claims 1 to 4, **characterised in that** a press-on element (12) is provided on the side of the wood fibre board (10.1, 10.2, 10.3) opposite the lifting device (8).

6. Method of transporting wood fibre boards (10.1, 10.2, 10.3) wherein the wood fibre boards (10.1, 10.2, 10.3) are transported horizontally on a transporting arrangement,
wherein the transporting arrangement comprises
- a first transporting device (2) for the horizontal transportation of wood fibre boards (10.1, 10.2, 10.3),
- a lifting device (8) for a wood fibre board (10.1, 10.2, 10.3) and,
- functionally connected to the lifting device (8), an acceleration or braking device (9) for the lifted wood fibre board (10.2) or the wood fibre board (10.3) being transported immediately in front of it in order to produce or undo partially overlapping wood fibre boards,
wherein the braking or acceleration device (9) is formed by a second transporting device (3),
wherein the lifting device (8) is installed between the first transporting device (2) and the second transporting device (3),
wherein the lifting device (8) is formed by height-adjustable rollers (11.1, 11.2, 11.3), wherein the rollers (11.1, 11.2, 11.3) have a drive,
wherein in a lifting position (18), a wood fibre board (10.2) is lifted at or after the first transporting device (2),
and between the respective lifted wood fibre board (10.2) and the wood fibre board (10.3) being transported immediately in front it, a speed difference is set,
so that overlapping of the wood fibre board or undoing of already existing overlapping takes place.

7. Method according to claim 6, **characterised in that** during overlapping transporting, a wood fibre board (10.1, 10.2, 10.3) is lifted in the lifting position (18) by height-adjustable rollers (11.1, 11.2, 11.3).

8. Method according to any one of claims 6 or 7, **characterised in that** a second transporting device (3) brakes or accelerates the lifted wood fibre board (10.2) or the wood fibre board (10.3) being transported immediately in front of it.

9. Method according to any one of claims 6 to 8, **characterised in that** the speed difference is set on the basis of a longitudinal dimension and/or the transporting speed of the wood fibre board (10.1, 10.2, 10.3).

10. Method according to claim 9, **characterised in that** the setting takes place on the basis of data stored in a control and as a function of transporting speeds and board length.

11. Method according to claim 6, **characterised in that** during the transporting of non-overlapping wood fibre boards (10.1, 10.2, 10.3), the contact area or line of a lifting device (8) with the wood fibre board (10.1, 10.2, 10.3) is set at around the same height level (15) as the first transporting device (2).

## Revendications

1. Système de transport pour panneaux de fibres de bois (10.1, 10.2, 10.3) avec au moins
- un premier dispositif de transport (2) pour le transport à plat de panneaux de fibres de bois (10.1, 10.2, 10.3),
- un dispositif de levage (8) pour un panneau de fibres de bois (10.1, 10.2, 10.3) et
- un dispositif d'accélération ou de freinage (9) couplé de façon fonctionnelle au dispositif de levage (8) pour le panneau de fibres de bois levé (10.2) ou du panneau de fibres de bois (10.3) transporté directement devant celui-ci pour produire ou disperser les panneaux de fibres de bois en partie superposés,
sachant que le dispositif de freinage ou d'accélération (9) est formé par un deuxième dispositif de transport (3),
sachant que le dispositif de levage (8) est installé entre le premier dispositif de transport (2) et le deuxième dispositif de transport (3), et **caractérisé en ce que**
le dispositif de levage (8) est formé par des rouleaux de roulement (11.1, 11.2, 11.3) réglables en hauteur et
**en ce que** les rouleaux de roulement (11.1, 11.2, 11.3) comportent un système d'entraînement.

2. Système de transport selon la revendication 1, **caractérisé en ce que** les hauteurs de transport (15) du premier dispositif de transport (2) et du deuxième dispositif de transport (3) sont identiques.

3. Système de transport selon la revendication 1 ou 2, **caractérisé en ce qu'**un dispositif de commande ou de régulation (14) est prévu avec lequel l'accélération ou le freinage peuvent être réglés en fonction de la vitesse de transport (6, 7) et/ou de la longueur (16) des panneaux de fibres de bois (10.1, 10.2, 10.3).

4. Système de transport selon la revendication 3, **caractérisé en ce que** la vitesse de transport (6,7) peut être réglée par le dispositif de commande ou de régulation (14) depuis le premier dispositif de transport (2) et le deuxième dispositif de transport (3).

5. Système de transport selon l'une quelconque des revendications 1 à 4, **caractérisé en ce qu'**un élément de pression (12) est prévu sur le côté du panneau de fibres de bois (10.1, 10.2, 10.3) opposé au dispositif de levage (8).

6. Procédé de transport de panneaux de fibres de bois (10.1, 10.2, 10.3), sachant que les panneaux de fibres de bois (10.1, 10.2, 10.3) sont transportés à plat sur un système de transport,
sachant que le système de transport comporte
- un premier dispositif de transport (2) pour le transport à plat de panneaux de fibres de bois (10.1, 10.2, 10.3) et
- un dispositif de levage (8) pour un panneau de fibres de bois (10.1, 10.2, 10.3) et
- un dispositif d'accélération ou de freinage (9) couplé de façon fonctionnelle au dispositif de levage (8) pour un panneau de fibres de bois levé (10.2) ou du panneau de fibres de bois (10.3) transporté directement devant celui-ci pour produire ou disperser les panneaux de fibres de bois en partie superposés,
sachant que le dispositif d'accélération ou de freinage (9) est formé par un deuxième dispositif de transport (3),
sachant que le dispositif de levage (8) est installé entre le premier dispositif de transport (2) et le deuxième dispositif de transport (3),
sachant que le dispositif de levage (8) est formé par des rouleaux de roulement (11.1, 11.2, 11.3) réglables en hauteur, sachant que les rouleaux de roulement (11.1, 11.2, 11.3) comportent un système d'entraînement,
sachant qu'un panneau de fibres de bois (10.2) est soulevé dans une position de levage (18) sur ou après le premier dispositif de transport (2),
et une différence de vitesse est réglée entre le panneau de fibres de bois (10.2) respectivement soulevé et le panneau de fibres de bois (10.3) directement transporté devant celui-ci dans la direction de transport,
de sorte qu'il en résulte un chevauchement des panneaux de fibres de bois ou une dispersion d'un chevauchement déjà existant.

7. Procédé selon la revendication 6, **caractérisé en ce qu'**un panneau de fibres de bois (10.1, 10.2, 10.3) est soulevé dans la position de levage (18) par les rouleaux de roulement (11.1, 11.2, 11.3) réglables en hauteur lors d'un transport en chevauchement.

8. Procédé selon l'une quelconque des revendications 6 ou 7, **caractérisé en ce qu'**un deuxième dispositif de transport (3) freine ou accélère le panneau de fibres de bois (10.2) soulevé ou le panneau de fibres de bois (10.3) directement transporté devant celui-ci.

9. Procédé selon l'une quelconque des revendications 6 à 8, **caractérisé en ce que** la différence de vitesse est réglée sur la base d'une cote de longueur et/ou de la vitesse de transport du panneau de fibres de bois (10.1, 10.2, 10.3).

10. Procédé selon la revendication 9, **caractérisé en ce que** le réglage a lieu sur la base de données mémorisées dans une commande et en fonction de la vitesse de transport et de la longueur de panneau.

11. Procédé selon la revendication 6, **caractérisé en ce que** la surface ou la ligne de contact avec le panneau de fibres de bois (10.1, 10.2, 10.3) d'un dispositif de levage (8) est réglée pendant le transport de panneaux de fibres de bois (10.1, 10.2, 10.3) ne se chevauchant pas au moins à peu près au même niveau de hauteur (15) que le premier dispositif de transport (2).
